# EUROPEAN PATENT APPLICATION

(11) **EP 3 275 519 A1**
(43) Date of publication of application: **31.01.2018**
(21) Application number: 17182874.2
(22) Date of filing: 24.07.2017
(51) Int. Cl.: A63F 13/828, A63F 13/65, A63F 13/533, A63F 13/335

(54) **FANTASY SPORTS GAME WHICH SCORES A MATRIX WHICH A PARTICIPANT POPULATES PERIODICALLY WITH PICKS**

(30) Priority: 25.07.2016 US 201615218315
(71) Applicant: Gamestreaks, Inc., Palos Hills, IL 60465-1495 (US)
(72) Inventor: GLEFFE, Marcos, Oak Lawn, IL 60453 (US)
(74) Representative: Franks & Co Limited

(57) **Abstract**

A fantasy sports game which scores a matrix, which a participant periodically populates with picks. After the games are actually played, the matrix is scored, with the scoring being dependent on the picks and their placement on the matrix. Preferably, the scoring is configured such that a participant is rewarded for having a streak of correct picks, aligned horizontally and/or vertically, in the matrix. The fantasy sports game may be configured such that the matrix is configured to be populated column by column, from left to right, by the participant. Each column of the matrix may be configured to be populated by having a participant move a pick up or down in the column. The fantasy sports game may be configured such that the participants communicate with a host of the game using, for example, one or more of the following: a desktop computer, laptop, tablet, smartphone, etc.

## Description

### Background

The present invention generally relates to fantasy sports games, such as online fantasy sports games, and more specifically relates to a fantasy sports game which scores a matrix, which is populated periodically with picks by a participant.

In general, fantasy sports, especially online fantasy sports games, have become increasingly popular. In fact, not only has fantasy sports become increasingly popular, but some news outlets have predicted that fantasy sports will grow even further in popularity, and will collectively generate annual revenue of over two billion dollars by as early as 2020.

A typical fantasy sports game provides for a draft where participants of the fantasy sports game populate their rosters with real players from different teams in a given league (such as players in the National Football League, Major League Baseball, etc.). Each week, each participant goes one-on-one against another participant, and each week each participant is required to choose which players on his or her roster will play that week. For example, a participant may have two or three quarterbacks on his or her roster, and before the games for a given week are actually played, the participant is required to choose which quarterback on his or her roster will play that week. Thereafter, as the games are actually played, the participants earn points or money based on how the players they have picked to play from their roster actually perform (i.e., from a statistical standpoint).

While such a game is fun, it effectively requires each participant to keep close track of injuries and playing time for each player on his or her roster as the season goes on. If a participant has not kept close enough track of the actual status of the players on his or her roster, it is possible that the participant may mistakenly start a player who is not even playing that week, due to injury, or who has been benched or who has recently been given limited playing time. Furthermore, in the case of a fantasy sports game based on the National Football League, it is possible that a participant mistakenly start a player on his or her roster whose team has a bye week, and therefore is not even going to be playing that week.

Having to keep track of the status of all the players on one's roster, and keep track of bye weeks in the case of the National Football League, can be time-consuming and frustrating to the participants. Furthermore, it can be frustrating to a participant if that participant has chosen a given player to play a given week, but then that player ends up getting hurt in the middle of a game, thereby preventing any future scoring from that particular player for that week.

### Summary

An object of an embodiment of the present invention is to provide a fantasy sports game which effectively eliminates the need for the participants to keep track of the real-life status of each player on his or her roster.

Another object of an embodiment of the present invention is to provide a fantasy sports game which has an exciting scoring system.

Briefly, an embodiment of the present invention provides a fantasy sports game which provides that each participant makes picks, and populates a portion of a matrix with his or her picks. After the games are actually played, the matrix is scored, with the scoring being dependent on the picks and their placement on the matrix. Preferably, the scoring is configured such that a participant is rewarded for having a streak of correct picks, aligned horizontally and/or vertically, in the matrix.

In one specific embodiment, the game is based on games played in the National Football League, and each week a participant populates a column of the matrix with his or her picks for the week. After the games are actually played for that week, the column of picks for that week is scored in the matrix. Then, the participant populates the next column of the matrix with his or her picks for that next week of games. After the games are actually played for that next week, the column of picks for that next week is scored in the matrix. Preferably, the game is structured such that the participant is rewarded for having a streak of correct picks (i.e., wins), horizontally and/or vertically, in the matrix. For example, having two or more correct picks in a line, horizontally and/or vertically, in the matrix preferably results in enhanced scoring.

While a preferred embodiment provides that the fantasy sports game is configured such that a participant populates the matrix, column by column, moving left to right, still other embodiments are entirely possible. For example, the fantasy sports game could be configured such that a participant populates the matrix, row by row, moving top to bottom. Of course, still other variations are entirely possible.

Furthermore, while a specific embodiment of the present invention provides a fantasy sports game which is configured to be played in association with games played in the National Football League, many other embodiments of the present invention are entirely possible. For example, the fantasy sports game could be configured to be played in association with games played in Major League Baseball, hockey games, soccer matches, horse races, etc.

### Brief Description of the Drawings

The organization and manner of the structure and operation of the invention, together with further objects and advantages thereof, may best be understood by reference to the following description taken in connection with the accompanying drawings wherein like reference numerals identify like elements in which:
Figure 1 is a basic block diagram showing the components of an exemplary system which can be used to implement a fantasy sports game in accordance with an embodiment of the present invention;
Figure 2 is a basic flow chart from a participant's point of view, showing the steps of playing a fantasy sports game in accordance with an embodiment of the present invention;
Figure 3 is a basic flow chart similar to Figure 2, but shows the steps of hosting the fantasy sports game, from the host's point of view;
Figure 4 illustrates an example matrix, which a participant periodically populates with picks, in order to play a fantasy sports game in accordance with an embodiment of the present invention;
Figure 5 illustrates one example of how the fantasy sports game can be configured to have a participant populate a given column of the matrix with picks; and
Figure 6 is similar to Figure 5, but shows two extra columns - a left-most column indicating the streak (if any) associated with a given row, and a right-most column indicating whether a bye week is associated with a given row.

### Description of an Embodiment

While this invention may be susceptible to embodiment in different forms, there is shown in the drawings and will be described herein in detail, a specific embodiment with the understanding that the present disclosure is to be considered an exemplification of the principles of the invention, and is not intended to limit the invention to that as illustrated.

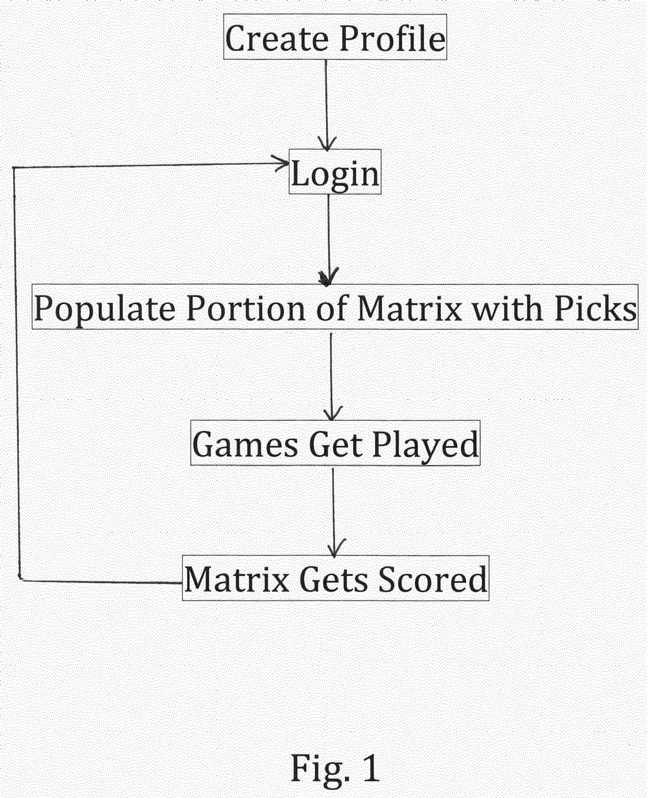

Figure 1 is a basic block diagram showing the components of an exemplary system which can be used to implement a fantasy sports game in accordance with an embodiment of the present invention. The components are conventional and typical for an online fantasy sports game. As shown, the system provides that a plurality of participants (i.e., Participant₁ through Participantₙ) communicate back and forth with a host through the Internet. The fantasy sports game may be configured such that the participants may communicate with the host using, for example, one or more of the following: a desktop computer, a laptop, a tablet, a smartphone, etc. The host may reside on one or more servers, and may contain one or more databases as well as one or more processors. This type of architecture is conventional, and is therefore not described in detail herein. This type of architecture is described in countless patents and published patent applications, for example United States patent application publication number 2010/0279774, which is hereby incorporated herein by reference in its entirety.

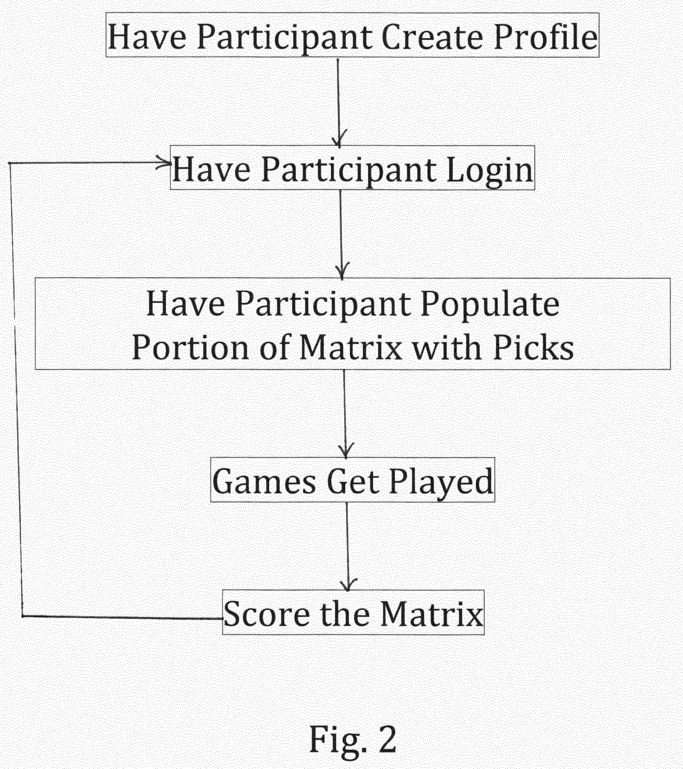

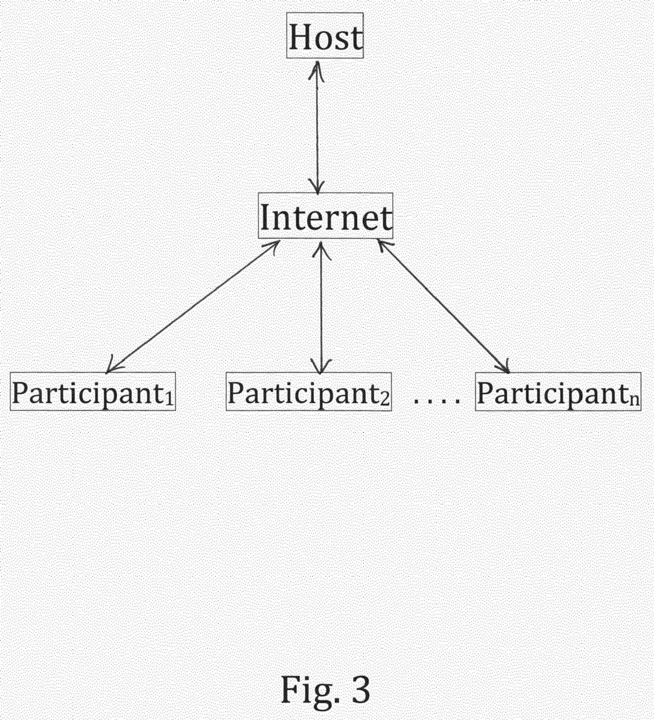

With regard to how the fantasy sports game is played, Figure 2 provides a basic flow chart illustrating, step by step, how the game is played from a participant's point of view. Figure 3 is a basic flow chart similar to Figure 2, but shows the steps of hosting the fantasy sports game, from the host's point of view. Both flow charts are self-explanatory, and playing the game will now be described from the participant's point of view.

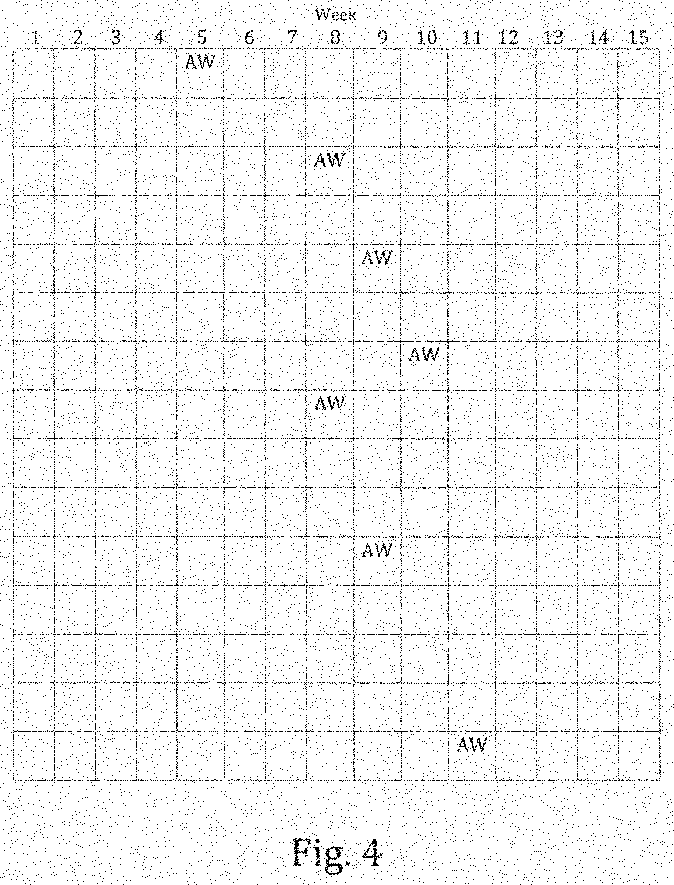

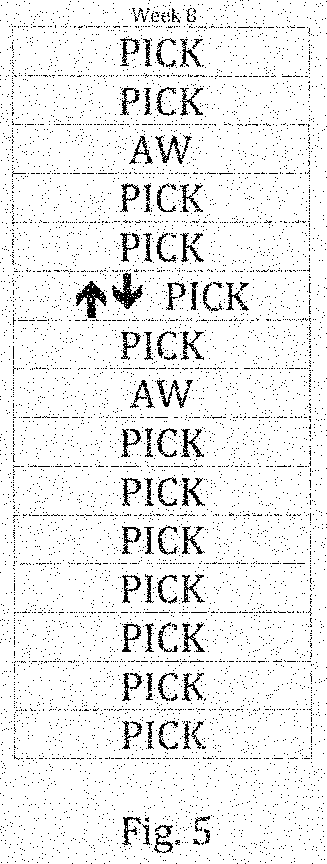

Initially, a participant completes a profile and then logs on. Then, the participant populates a column of a matrix with picks. Figure 4 illustrates an exemplary matrix, and Figure 5 shows one way in which the fantasy sports game be configured to have the participant populate the given column.

In general, the participant makes his or her picks for the week, and places each pick in a desired cell in the column relating to that particular week. Some time after the participant populates the column for that week with picks, the games for that week are actually played (for example, the National Football League plays the games). After the games are actually played, the fantasy sports game scores the matrix. Thereafter, the participant makes his or her picks for the next week, strategically placing each pick in a desired cell in the column relating to that particular week. Some time after the participant populates the relevant column for that next week with picks, the games are actually played. After the games are actually played, the fantasy sports game system scores the matrix, and so on until the entire matrix is populated with picks and is scored by the system.

In terms of how a participant populates a given column with picks each week, the system can be configured such as is shown in Figure 5, wherein each cell of the column represents a game to be played that week. The participant goes to a given cell, makes a pick, and then moves that pick up or down in the column, and then repeats the process for the next pick (i.e., in a different cell) until all picks have been made and all picks are in their desired location in the column. Of course, the game can be configured such that a participant makes picks and populates a column in a different manner. For example, the game can be configured such that a participant makes a pick, and then merely selects which cell within the column that pick is to be placed. Still other variations are entirely possible while staying within the scope of the present invention.

In the above description, the term "week" is used because the above description is specific to games being played on a weekly basis in the National Football League. As such, there are bye weeks for teams on a rotating basis. The fantasy sports game is preferably configured such that bye weeks are automatically populated in the matrix as an automatic win, and the participant cannot move the bye weeks around on the matrix. This is shown, for example, in Figure 4 wherein every cell that contains "AW" is an automatic win associated with a bye week.

Figure 5 shows the situation where a participant is populating one of the columns of the matrix (i.e., the column associated with week 8) with picks, and shows the cells which contain an automatic win using "AW" just like as is shown in Figure 4. In Figure 5, the participant can move a pick up or down in the column, and can place the pick anywhere in the column, other than in a cell which contains an automatic win. Obviously, if that particular week has no byes, there would be no automatic wins in the column, and the participant can place a given pick in any cell in the column.

Preferably, the fantasy sports game is configured to score the matrix shown in Figure 4 such that a participant gets rewarded (i.e., earns more points or money) for having a streak of correct picks, horizontally and/or vertically, in the matrix. For example, having two or more correct picks in succession (i.e., adjacent to each other) in a given column or row in the matrix may result in enhanced scoring.

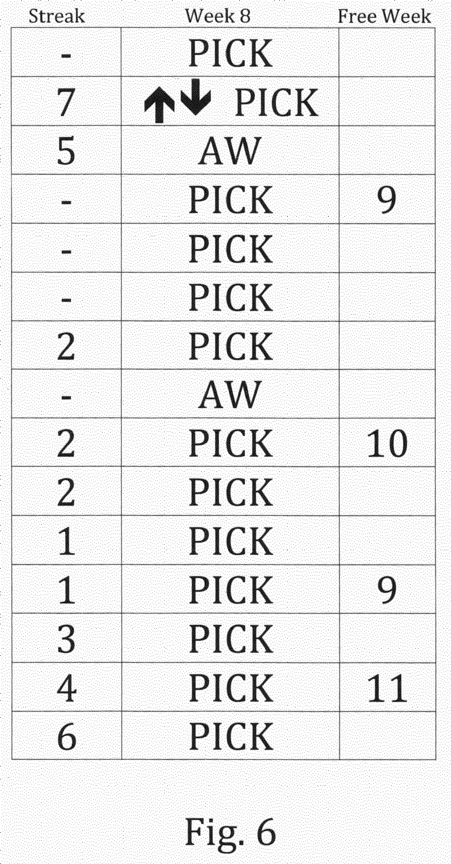

To make it easier for a participant to keep track of current streaks as well as when a bye week will occur for a given row, a display can be provided as illustrated in Figure 6. As shown, the column to be populated with picks that week can be provided in the middle, with the current streak total (i.e., the number of consecutive winning picks) for that particular row shown to the left, and an indication to the right of whether and when that particular row has an automatic win positioned therein in the matrix.

For example, in the left-most column (called "Streak") where the number "7" is displayed, the number 7 indicates to the participant that the previous 7 cells in that particular row contain a winning pick, and therefore the participant is on a streak. As such, the participant will want to place a pick in which he or she has confidence in the cell next to the 7 (i.e., in the "Week 8" column), so as to continue the streak in that particular row, and increase the streak to 8. For example, if Chicago is playing Green Bay that week, and among all the games being played, the participant is most confident that Chicago will beat Green Bay, then the participant will want to pick Chicago to win the game, and then place that pick next to the number 7 so as to hopefully continue the steak, and increase the streak to 8 games. On the other hand, if Oakland is playing Atlanta and the participant has no confidence in his or her ability to correctly pick the winner, then the participant will want to pick either Oakland or Atlanta to win the game, and then place that pick in a row which has no streak going (such as the top-most row shown in Figure 6).

Likewise, a participant will want to place a pick in which he or she confidence in a cell which is in a row which has an automatic win coming up on the matrix. This will also increase the chances of a streak, and result in enhanced scoring. For example, in the right-most column (called "Free Week") where the number "9" is displayed, the number 9 indicates to the participant that an automatic win is in that given row in the matrix in week 9, which is the very next week. As such, the participant will want to place a pick in which he or she confidence in the cell which is next to the 9 (i.e., in the "Week 8" column), so as to maximize the possibility of having or continuing a streak for that particular row, resulting in enhanced scoring.

As a participant plays the game from week to week, the game scores the matrix and preferably displays the points earned each week at the bottom of the matrix. As such, a participant can view the entire matrix and the score associated with each week. Preferably, the game also keeps a running tally and displays that for the user to view. Standings may also be displayed viz-a-viz other participants playing the game.

As mentioned, the term "week" is used in the above description because the above description is specific to a fantasy sports game which corresponds to games being played in the National Football League. However, the fantasy sports game can be configured to be played in association with other sports, such as baseball games played in Major League Baseball. In that case, the participant would populate a new column every day, as opposed to every week. Still other variations of the game are entirely possible, depending on the sport involved, while still staying within the scope of the present invention.

Additionally, while the above description describes that a participant populates the matrix, column by column, moving left to right, still other embodiments are entirely possible. For example, the fantasy sports game could be configured such that a participant populates the matrix, row by row, moving top to bottom. Of course, still other variations are entirely possible.

With regard to the picks made by a participant, the game can be configured such that the picks are who the participant thinks is going to win each game (with or without a spread), the over or under associated with each game, or really any other thing which can be picked by the participant relating to games to be played.

Regardless of the exact embodiment, the present invention provides many advantages. For example, participants are not required to keep track of the status of each player on his or her roster in order to play the game well. Furthermore, the matrix itself and the way it is scored resemble a board game, and many people find board games fun, interesting and exciting.

While specific embodiments of the invention have been shown and described, it is envisioned that those skilled in the art may devise various modifications without departing from the spirit and scope of the present invention.

## Claims

1. A fantasy sports game configured to be played by a participant, said fantasy sports game comprising a matrix which is configured to be populated periodically with picks by the participant, wherein the fantasy sports game periodically scores the matrix after games are played corresponding to the picks.

2. A fantasy sports game as recited in claim 1, wherein the fantasy sports game is configured such that the matrix is configured to be populated column by column, from left to right, by the participant.

3. A fantasy sports game as recited in claim 2, wherein the fantasy sports game is configured such that each column of the matrix is configured to be populated by moving a pick up or down in the column.

4. A fantasy sports game as recited in claim 1, wherein the fantasy sports game is configured to provide enhanced scoring for streaks, wherein in a streak, correct picks are next to each other in the matrix.

5. A fantasy sports game as recited in claim 1, wherein the fantasy sports game is configured to provide enhanced scoring for consecutive correct picks in a horizontal line in the matrix.

6. A fantasy sports game as recited in claim 1, wherein the fantasy sports game is configured to provide enhanced scoring for consecutive correct picks in a vertical line in the matrix.

7. A fantasy sports game as recited in claim 1, wherein the fantasy sports game is configured to automatically populate cells of the matrix with automatic wins.

8. A fantasy sports game as recited in claim 7, wherein the automatically correct wins which are automatically populated in the matrix correspond to bye weeks of a sports league.

9. A fantasy sports game as recited in claim 1, wherein the fantasy sports game is configured to display a single column from the matrix, while providing indicators of streaks associated with the cells of the single column.

10. A fantasy sports game as recited in claim 1, wherein the fantasy sports game is configured to display a single column from the matrix, while providing indicators of automatic wins associated with the cells of the single column.

11. A fantasy sports game as recited in claim 1, wherein the fantasy sports game is configured to display a single column from the matrix, while simultaneously providing indicators of streaks associated with the cells of the single column of the matrix and providing indicators of automatic wins associated with the cells of the single column of the matrix.

12. A method of hosting a fantasy sports game configured to be played by a participant, said method comprising having the participant periodically populate a matrix with picks, and periodically scoring the matrix after games are played corresponding to the picks.

13. A method as recited in claim 12, further comprising having the participant populate the matrix column by column, from left to right.

14. A method as recited in claim 13, further comprising having the participant populate each column by moving picks up or down in the column.

15. A method as recited in claim 12, further comprising displaying a single column from the matrix, while providing indicators of streaks associated with the cells of the single column.

16. A method as recited in claim 12, further comprising displaying a single column from the matrix, while displaying indicators of automatic wins associated with the cells of the single column.

17. A method as recited in claim 12, further comprising displaying a single column from the matrix, while simultaneously displaying indicators of streaks associated with the cells of the single column of the matrix and displaying indicators of automatic wins associated with the cells of the single column of the matrix.
